# EUROPEAN PATENT SPECIFICATION

(11) **EP 0 613 342 B1**
(45) Date of publication and mention of the grant of the patent: **14.02.1996**
(21) Application number: 92923223.9
(22) Date of filing: 05.11.1992
(51) Int. Cl.: A23L 1/314

(54) **USE OF MESOMORPHIC PHASES IN MEAT PRODUCTS**
VERWENDUNG VON MESOMORPHEN PHASEN IN FLEISCHPRODUKTEN
UTILISATION DE PHASES MESOMORPHES DANS LES PRODUITS CARNES

(30) Priority: 21.11.1991 EP 91203064
(43) Date of publication of application: 07.09.1994
(73) Proprietor: UNILEVER PLC, London EC4P 4BQ (GB); UNILEVER N.V., NL-3000 DK Rotterdam (NL)
(72) Inventor: HEERTJE, Isaäc, NL-5131 NW Alphen (NL); HENDRICKX, Hendricus Arnoldus C.M., NL-3145 VK Maasluis (NL); VAN DEN OORD, Adrianus Henricus Antonius, NL-3951 LJ Maarn (NL)
(74) Representative: Kirsch, Susan Edith
(86) International application number: EP9202566
(87) International publication number: WO9309682

(56) References cited:
- EP-A- 0 325 315
- EP-A- 0 404 214

## Description

The present invention relates to the use of mesomorphic phases of edible surfactants in meat products.

According to the general prior art the structuring of foodstuffs can be accomplished in various ways. Two main routes can be distinguished:
(1) the structuring by biopolymers such as proteins and carbohydrates, and
(2) the structuring by "particles" in the widest sense.

In the former case polymeric molecules cross-link to form a tangled, interconnected molecular network in water. In those systems the presence of junction zones or entanglements leads to gel formation and the enclosure of water. Examples of those polymeric substances are starch in puddings, gelatin in desserts and in the water phase of fat spreads, pectin in jams, carrageen in desserts and in the water phase of fat spreads, and many others.

In the second case entities such as air cells, water droplets, fat droplets, crystals, starch granules or casein micelles are dispersed into the food system. Interaction forces between such particles determine the consistency and the physical stability of the food products. Many food systems fall into this category. In yoghurt aggregated protein particles form a network of protein strands. In mayonnaise an "interconnected" structure of oil droplets is responsible for its consistency. In a shortening fat crystals form an interconnected network structure enclosing oil. In a margarine water droplets are dispersed into a continuous network structure of fat crystals and oil. So, this represents a dispersion of particles in a network of particles. Even more complicated structures are found in butter and ice cream. But in all those cases a build-up of structure of particle networks can be distinguished, which is responsible for the consistency of the finished products.

The present invention provides a new way of structuring meat products. The presence of mesomorphic phases of edible surfactant molecules and water can give rise to a firm texture and consistency and a juicy taste. The use of this property of mesomorphic phases, to give consistency to meat products, is new to the food business.

For the purpose of the invention the term mesomorphic phase is intended to include all semi-ordered phases of water and structuring materials. Mesomorphic phases and their method of preparation are known to food scientists.

The prior art, more in particular S. Friberg "Food emulsions", Marcel Dekker, New York 1976 page 67-139 discloses food emulsifiers and their associations with water. It provides part of the scientific background of the mesomorphic phase behaviour of edible emulsifiers, but does not disclose the use of bulk regions of mesomorphic phases in finished foodstuffs. In this citation applications of lamellar- and gel mesomorphic phases in the bakery area are mentioned. These phases are introduced in cake and bread formulations during processing in order to enhance the aerating properties or to enhance complexing with starch. Consequently, in some stage of the processing mesomorphic phases are present. However, after baking, i.e. in the finished foodstuffs, no indications of mesomorphic phase structures could be found by differential scanning calorimetry.
Pages 141-213 deal with ice-cream. Pages 166 mentions the possible presence of lamellar phase or gelstructures at the oil-water interface. Ipso facto any such structures are of a very limited size.

Furthermore F.D. Gunstone, J.L. Harwood and F.B. Padley, "The lipid handbook", Chapman and Hall, London - New York, 1986, page 227 discloses the use of lamellar phases for aerating in bakery batters, which lamellar phases disappear from the product upon baking as our physical experimental work shows. This citation also discloses enhanced complexing (formation of inclusion compounds) of amylose with a lamellar phase of monoglyceride and water in processed potatoes and other starch based products. However, in the finished food products no mesomorphic phase could be detected.

The new way of structuring a meat product according to the present invention may be described e.g. as a regular, molecular arrangement of surfactant molecules with intervening aqueous regions. For the purpose of the invention the term mesomorphic phase is intended to include all semi-ordered phases of water and edible surfactant materials. Examples of mesomorphic phases are cubic, hexagonal, alpha-crystalline gel, beta-crystalline coagel and lamellar phases. Preferred mesomorphic phases for use in accordance with the invention are lyotropic phases; also preferred are lamellar phases. For the purpose of the present invention, the term lamellar phase refers to any system having a pattern of alternating bilayers of edible surfactants and water. Examples of lamellar phases are lamellar droplet phases, lamellar gel phases and lamellar phases containing extended parallel layers of surfactants and water.

In the lamellar phase surfactants, are believed to form a bilayer structure. It is believed that a bulk lamellar phase consists of stacks of bi-layer structures with an intervening aqueous phase. Meat products according to the present invention preferably comprise bulk regions of the lamellar phase whereas it has been suggested that known products of the prior art might contain boundary layers of this phase at interfaces, such as those found around oil droplets in water-contnuous fatty products. In a preferred embodiment of the invention the meat products comprise discrete areas of mesomorphic phase having a particle size between 1 µm and 1,000 µm. Preferably the product contains at least 5% by volume of a mesomorphic phase. Particular good results are obtained by using from 5 - 30% wt% of edible surfactant in the product, preferably more than 7.5%.

The lamellar phase may be formed by temperature cycling of a mixture of surfactant and water. In the crystalline state, the surfactant molecules are oriented with adjacent hydrophillic groups and the hydrophobic chains are parallel and densely packed. On contact with water and heating to the so called 'Krafft' temperature it is believed that water penetrates between the adjacent 'head' groups to form a 'liquid crystal' structure. On cooling below the 'Krafft' temperature, the hydrophobic chains pack into a regular lattice, producing a one-dimensionally periodic 'sandwich' structure of alternating surfactant and aqueous layers.

As an example of the 'gel' structure obtained: for a mixture of water and a distilled monoglyceride made from fully hydrogenated lard at a pH of 7, which has been cycled above the Krafft temperature, X-ray difraction in the low-angle region reveals that the thickness of the monoglyceride layers is of the order of 4 - 6 nanometers. As the proportion of water in the mixture in the system is increased the inter-planar spacing increases, as water is taken up between the monoglyceride layers. It will be realised that the fine structure of the mesomorphic phase, especially as regards the inter-planar spacing, will vary when different surfactants are used.

Another preferred mesomorphic phase according to the invention is three dimensional structure of hydrophilic surfactant molecules, more in particular a beta-crystalline coagel, which is believed to consist of small plate-like crystals having a an average thickness of less than 1 µm or even less than 0.1 µm, said platelets being dispersed in an aqueous environment. This is a suspension of beta-crystalline emulsifier in water. These coagels may be formed instead of an alpha crystalline gel phase under certain conditions, such as at acid pH and shear. In the context of the invention the coagel phase is considered a semi-ordered phase of water and edible surfactant (mesomorphic phase)

The presence of mesomorphic phases in meat products may be detected by any method suitable for the detection of regular arrangements of surfactant materials. Suitable methods include for example NMR, electron microscopy, differential scanning calorimetry, light microscopy and X-ray diffraction.

Consequently, the present invention relates in the first place to meat products comprising a mesomorphic phase of edible surfactant. The mesomorphic phase may be present as structuring agent, for example for providing a firm consistency and juiciness to the product, also it may impart features as a fat-replacer, preservative, lubricating agent, consistency control agent, moisture retention agent and/or flavour release agent in meat products. In this respect it is advantageous that mesomorphic phases often have an appearance similar to fat, and may hence also contribute to the fatty appearance of meat products.

With respect to the use as fat replacer it should be noted that the present invention can provide meat products compositions which have a reduced calorific contents as compared to normal meat products. Preferably the caloric reduction is at least 25%, more preferred from 30-90%.

In recent years there have been several developments regarding so-called "fat replacers". Such materials are intended to have as far as practical the functional and sensorial properties of fats, but to have a reduced calorie content and, where possible, health benefits as compared to fats. Much effort has been spent in the development of new materials which have a fatty functionality but are poorly adsorbed or non-digestible in the human gut. It is generally believed that further experimental work will be required before the physiological effects are fully determined. There remains a clear need for fat replacers which comprise materials of well-understood physiological effect.

It was now found that the mesomorphic phase of edible surfactants can be used as a fat-replacing food component with a fat-like functionality and a simple composition in meat products. Fat-replacement generally also results in a reduction of the cholesterol level of the product.

Their use as preservative is ascribed to the enhanced microbial stability, caused by the limited size of the intervening water areas in mesomorphic phase systems, which hinders the outgrowth of microorganisms. For example, the size (spacing) of the intervening water layers in a mesomorphic phase which is a lamellar phase system containing 95% water is approximately 0.1 µm, which is far below the size (1µm approx.) of the effective microorganisms.

Their use as lubricant is connected with the fatty functionality and the proper rheology of these materials, even at a high water content. Two aspects are considered to be important in this respect: the hydrophobicity of the aliphatic chains of the applied surfactant molecules and the induced flow properties, e.g. in case of the mesomorphic lamellar phase structure the bilayers of surfactant molecules are separated by layers of water and are thus free to slide in relation to each other with the water as the gliding plane.

Their use as consistency control agent is directly connected with the structuring capability. The desired rheological properties can be achieved by proper choice of experimental parameters, such as concentration of non-ionic- and ionic surfactant, shear, pH and electrolyte. An example of such an application is in the design of spoonable and pourable products.

Their use as moisture retention agent and material for providing juiciness is connected with the enclosure of the water between aggregated surfactant molecules. The physical state of water in foods influence the physical, chemical and functional characteristics of foods and food components, by influencing the water transport and/or the water mobility and/or the water activity. The present invention allows the introduction of large amounts of "immobilized" water, which can be freed at a later stage.

Their use as flavour release agent is connected with the possibility to entrap flavours in the water phase c.q. the surfactant phase of the mesomorphic phase. The nature of the systems would lead to a controlled release of the applied flavours. Many controlled release delivery systems have been described in the literature, e.g. the use of liposomes. Those systems have to be prepared separately and have to be added to the foodstuff as an extra and only in a limited amount. The present invention allows the addition of flavour to the meat products as such with proper retention of flavour components.

In a preferred embodiment of the invention the mesomorphic phase is a lamellar gel phase. These phases are particularly preferred, because they can include a sensational amount of water, e.g. 98 or even 99 wt.%, based on the mesomorphic phase of edible surfactant and water.

Another preferred element of the present invention is the presence of bulk regions of mesomorphic phases in meat products. Most preferred is the presence of bulk regions of mesomorphic lamellar phases. Bulk phases preferably consist of either a more or less continuous mesomorphic phase or of discrete particles of mesomorphic phase, for example having a number average particle size of between 1 µm and 10,000 µm, preferably between 1 µm and 1,000 µm. The bulk regions of mesomorphic phase of edible surfactants may advantageously be used for replacing the aqueous phase and/or oil phase in meat products in accordance to the invention.

Preferably meat products in accordance to the invention contain at least 5%, more preferably at least 7.5% by volume of mesomorphic phase of edible surfactant, more preferably 10-90% by volume, for example 20-80% by volume, whereby the volume of the mesomorphic phase refers to the volume of the combined water/edible surfactant system.

According to the present invention any edible surfactant may be used although lipidic substances are preferred. However, the use of other, non lipidic surfactants, for example surfactant or amphiphylic carbohydrates is not excluded. In general the preferred edible surfactants are selected from the group consisting of nonionic surfactants, anionic surfactants and cationic surfactants.

Preferred non-ionic surfactants are edible monoglycerides, diglycerides, poly-glycerol esters, non-ionic phospholipids, non-fatty carboxylic acid esters of fatty acid esters, partial sugar-fatty acid esters and, partial fatty acid esters of polyols and mixtures thereof. The fatty acids can be saturated to highly unsaturated. Excellent mesomorphic phases are obtainable by using one or optionally more than one non-ionic surfactant.

Preferred cationic surfactants are cationic phospholipids, cationic non-fatty carboxylic acid esters of fatty acid esters and mixtures thereof.

Preferred anionic surfactants are lactylated fatty acid/ salts, anionic phospholipids, anionic non-fatty carboxylic acid esters of fatty acid esters and their metal salts, fatty acids and their metal salts and mixtures thereof.

The fatty acid chains used in these surfactants can be of any type and origin. Preferably, however C₈₋₂₈ fatty acid chains are present, more preferred C₁₂₋₂₂, for example C₁₄₋ ₁₈. The fatty acids may for example be saturated, unsaturated, fractionated or hydrogenated and be derived from natural (for example dairy, vegetable or animal) source or synthetic sources.

For the purpose of the present invention meat products are food products containing a significant level of animal tissue or substitutes therefor. The animal tissue may for example be derived from pork, beef, poultry, game, fish en mixtures thereof. Meat substitutes can for example be structured vegetable proteins, for example soy protein of myco-protein, having a similar food function as animal tissue. Preferably the level of animal tissue or substitute therefor in food products of the invention is at least 10%, more preferred from 30-95%, most preferred 40-90% by weight of the product. In a preferred embodiment of the invention the animal tissue or substitute therefor is present in the product in comminuted or ground form, such as for example in pate, sausages, hamburgers, fish, poultry and constituted meat products etc. Other possible products include meat sauces, for example meat stew or ragout.

While meat products according to the present invention can comprise a mesomorphic phase comprising 99-5 wt.% of water, it is preferred that the mesomorphic phase comprises 98-60 wt.% and in particular 97-80 wt.% of water, the percentages being based on the total weight of the mesomorphic phase.

Preferably the total level of edible surfactants in meat products of the invention is from 0.1 to 30%, more preferred 0.5-20%, most preferred 1-15% by weight of the foodstuff.

Typical embodiments of the invention as illustrated hereafter by example comprise as the mesomorphic phase, in particular the bulk mesomorphic phase a combination of a major amount of a non-ionic surfactant and a minor amount of an ionic co-surfactant. Preferably, the mesomorphic phase comprises 1-30%, more preferred 2-15 wt.% of non-ionic surfactant for example monoglycerides and 0.005-10% more preferred 0.01-2 wt.% of ionic co-surfactant for example an alkali metal salt of a lactylated fatty acid, preferably sodium stearoyl lactylate, the percentages being based on the total weight of the mesomorphic phase.

The presence of "non-ionic", "cationic" and "anionic" surfactants is of course dependent on the pH-value of the meat product in which the surfactants are used. In this respect it should be noted that normally the pH for meat products is between 4 and 8.

The combination of non-ionic and ionic surfactants is preferred because the ionic surfactants are believed to give rise to an electrical charge at the interface of the mesomorphic structure used according to the present invention. The mutual repulsion at the interface of surfactant and water in the mesomorphic phase, for example the lipid bi-layers in a mesomorphic lamellar structure, creates a layer structure in which a surprisingly large amount of water can be incorporated. This phenomenon allows for the use as edible fat replacer and water retention agent as attractive applications.

Preferably the nonionic surfactant and the ionic surfactant are used in weight ratios of from 100 : 1 to 1 : 10, more preferred 50 : 1 to 1 : 1, for example 20 : 1 to 5 : 1.

Preferred non-ionic surfactants are monoglycerides, lactylated esters of monoglycerides and phospholipids. Preferred ionic co-surfactants are alkali-metal salts of lactylated fatty acids, e.g. sodium stearoyl lactylate (SSL), citric acid esters, ionic phospholipids (e.g. phosphatidic acid), succinated esters and tartaric acid ester of monoglyceride.

For example in the presence of the alkali metal salt of a lactylated fatty acid, a monoglyceride-based mesomorphic system can take up a large quantity of water into the inter-planar water layers, and this 'swelling' of the emulsion improves suitability of the products as edible fat replacers. While the invention will be illustrated hereafter by reference to examples in which the surfactant system comprises both monoglyceride and SSL, the use of other, single surfactants or preferably combinations of two or more surfactants to obtain a swellable mesomorphic system is not hereby excluded.

Surprisingly it has also been found that the mesomorphic phase, which is used according to the invention, can be used in meat products containing electrolyte, without affecting the structuring capability of the system. One example of electrolytes that may be incorporated is sodium chloride. Other examples are polyphosphates, preferably alkali metal polyphosphates. The amount of electrolytes in foodstuffs according to the invention preferably ranges from about 0.01 - 5 wt.%, more preferred 0.1 to 3%, for example 0.2 to 2% based on the total weight of the meat product.

Meat products of the invention may in addition to the above mentioned ingredients comprise any ingredient which can be present in meat products such as flavours, spices, vegetables, skimmed milk, proteins, flavour enhancers, preservatives, colouring agents, bulking agents, starch, added fat, gelling agents etc. Also free water, that is water not being present as part of the meat or the mesomorphic phase, may be present. Generally the total level of these ingredients will be from 0-80% by weight of the composition, more general 0.1 to 40%.

For preparing meat-products containing the mesomorphic phase in accordance to the invention, it is possible to prepare the mesomorphic phase separately and add this phase as an ingredient to the other ingredients of the product. It is generally preferred to prepare the mesomorphic phase of the edible surfactant "in-situ" in the presence of one or more other ingredients of the composition, for example during grinding. In any case, however, the preparation of the mesomorphic phase preferably takes place while heating to a temperature above the Krafft temperature, followed by cooling. Generally these temperatures are from minus 30 to 80°C, more general 40-70°C. Any heat-sensitive ingredients or ingredients which could prevent the formation of a mesomorphic phase are preferably added after cooling.

The invention will be further illustrated by means of the following examples. Unless specified otherwise, all percentages are weight percentages.

### Example I

A mesomorphic phase of edible surfactant was prepared by mixing the ingredients in a water jacketed vessel at 65°C for about 30 minutes. NaOH was used to set the pH of the product to 5.5, followed by cooling the product in a votator A-unit operated at 1500 rpm with a throughput of 2 kg/hour. The exit temperature was 12 °C. The resulting mesomorphic phase was packed in 2 kg containers and stored at 5°C until use.

| Ingredients | wt % |
|---|---|
| Monoglyceride (Hymono 8803, ex Quest Int) | 10% |
| SSL (Admul SSL 2112 ex Quest Int) | 1% |
| NaOH | trace |
| water | balance |
| (Hymono 8803 is 90% mono, ex saturated palm oil and Admul SSL 2112 is sodium stearoyl lactylate) | |

### Example II

A pâte was prepared from the following ingredients:

| Ingredient (wt%) | Pâté | Crème pâté |
|---|---|---|
| Pork liver | 28.60% | 22.00% |
| Pork fat | - | 15.00% |
| Pork meat | - | 16.00% |
| Pork bellies | 20.00% | - |
| Water | 14.88% | 10.17% |
| Wheat starch | 3.00% | - |
| Butter | - | 2.40% |
| MilKpowder | - | 0.86% |
| Curing salt (NaNO₂) | 1.50% | 1.61% |
| Dextrose | 1.00% | - |
| Sugar | - | 0.40% |
| Onions | 0.52% | 0.46% |
| Ansjovis | - | 0.29% |
| Egg powder | - | 0.43% |
| Sodium ascorbate | - | 0.03% |
| Spices | 0.50% | 0.35% |
| Mesomorphic phase (as in Example I) | 30.00% | 30.00% |

The formulations were prepared in a bench scale "STEPHAN" steam jacked small chopper. Total formulations weight about 3.0 kg. The method of manufacture was as follows:

Liver, curing salt and spices were chopped until a fine comminute at a temperature of 15°C. The jacketed bowl was heated to 48°C and the preheated other meat ingredients were added together with the remaining ingredients except for the mesomorphic phase. After emulsifying the mesomorphic phase of example I was chopped in to form a emulsion at 40-45°C. The emulsion was deaerated and filled into metal cans at a net weight of 215g. To create a shelf life of at least 18 months at ambient the cans were sterilised at 114°C for 65 minutes.

The resulting products had a reduced fat content, reduced cholesterol level and reduced caloric content as compared to standard pates. Despite this the product was of good taste, spreadability and juiciness.

### Example III

Frankfurters were prepared from the following ingredients:

| | Comparison wt% | inventive wt% |
|---|---|---|
| Lean beef | 16.00% | 16.00% |
| Pork meat | 42.00% | 51.00% |
| Fat pork meat | 29.00% | - |
| Water | 10.00% | 10.00% |
| Curing salt (Na NO₂) | 2.00% | 2.00% |
| Poly phosphates | 0.40% | 0.40% |
| Sodium ascorbate | 0.05% | 0.05% |
| Spices | 0.55% | 0.55% |
| Mesomorphic phase (of Example I) | - | 20.00% |

The formulations were prepared in a bench scale "STEPHAN" small chopper. Total formulation weight about 3 kg. The ingredients were comminuted at 8-10°C to a stable slurry and deaerated at the end of the mixing. The meat dough was stuffed in a cellulose casing with a diameter of 20 mm. After stuffing and linking the sausages links were predried at 60°C for 60 minutes at 60% relative humidity, smoked at 60°C for 15 minutes of 75% relative humidity and cooked in the casing for 15 min. at 80°C.

After removing the casing the sausages were vacuum packed and in pack pasteurised at 90°C for 60 minutes.

Both the comparative product as well as the mesomorphic phase containing sausages showed a good stable emulsion quality, taste and juiciness. The product of the invention, however, contained a significant lower level of fat.

### Example IV

Hamburgers were prepared as follows:

### COMPOSITION OF BURGERS

| Beef Burger | | |
|---|---|---|
| | Reference | A |
| | parts by weight | |
| Lean beef | 73.5 | 78.0 |
| Pork back fat | 25.5 | 9.0 |
| Salt | 0.7 | 0.7 |
| Curafos 7000 (polyphosphate) | 0.2 | 0.2 |
| White pepper | 0.1 | 0.1 |
| Mesomorphic phase | - | 12.0 |

| Onion burger | | |
|---|---|---|
| | Reference | B |
| | parts by weight | |
| Lean beef | 67 | 74 |
| Pork back fat | 16 | 7 |
| Chopped onion | 10 | 10.9 |
| Water | 1.8 | 2 |
| Rusk | 4.5 | 5 |
| Salt | 0.7 | 0.678 |
| White pepper | trace | trace |
| Mesomorphic phase | 0 | 12 |

| Lean Minced Burger | | | |
|---|---|---|---|
| | Reference | C | D |
| | parts by weight | | |
| Lean beef | 500 | 450 | 400 |
| Mesomorphic phase | 0 | 50 | 100 |
| Salt | 3.5 | 3.5 | 3.56 |
| White pepper | 0.5 | 0.5 | 0.5 |

The following mesomorphic phases were used:

| | P %wt | Q %wt | R %wt |
|---|---|---|---|
| Monoglycerides (Hymono 8803)* | 10% | 10% | 12% |
| SSL (Admul SSL 2012)* | 1% | - | 0.5% |
| Admul DATEM 1935* | - | 1% | 0.5% |
| NaOH | trace | trace | trace |
| Water | balance | balance | balance |

| | | | |
|---|---|---|---|
| * ex Quest Int | | | |

The mesomorphic phases were prepared as in Example I.

The products were prepared as follows. Lean beef and pork fat were minced separately in a Bizerba (type) meat mincer, equipped with an outlet plate with 5 mm holes. The temperature of meat and fat was kept at 2 to 4°C. Minced meat, minced fat, mesomorphic phase and all other ingredients were mixed in a Kenwood household mixer, at 4°C, and the mix formed into burgers, 10 cm diameter and approximately 100 g units, using a hamburger shaper. The burgers were packed in Alu-foil sachets and frozen in a freeze cabinet at -25°C. They remained stored at -25°C until used.

The burgers were cooked at 24 hrs frozen storage. They were shallow fried directly from the freezer in butter (30g for 4 burgers); starting at 135°C for 8 to 10 minutes turning the burgers at intervals.

The organoleptic properties of the hamburgers was evaluated as follows: The beef burger (reference) had a meaty but dry taste. Burger A when prepared with mesomorphic phase P was succulent but left some aftertaste. Burger A when prepared with mesomorphic phase Q was succulent without aftertaste, when prepared with mesomorphic phase R, a succulent product with a good meaty taste was obtained. The latter product was preferred.

The onion burgers (reference, and prepared with mesomorphic phase P, Q and R) were all of comparable quality, although a small preference for the product with mesomorphic phase P existed.

The reference lean minced burger was very dry. Burger C with mesomorphic phase P was succulent and had a good taste. Burger D with mesomorphic phase P was better than the reference although a little bit too soft and pulpy.

### Example V

A turkey spread of the following ingredients was prepared:

| Ingredient(wt%) | |
|---|---|
| Turkey-meat | 56% |
| Mesomorphic phase | 24% |
| ice/water | 18% |
| salt | 0.5% |
| spices | 0.4% |
| milk protein | 1.0% |
| Na-monoglutamate | 0.1% |

The spread was prepared by heating the turkey meat to 70°C while cutting, followed by addition of the dry ingredients, the ice/water mixture and the mesomorphic phase (as in example I). The cutting was continued until a homogeneous spread like product was obtained. The resulting product was of reduced fat-content as compared to standard poultry spreads, but has nevertheless a good, juicy taste.

### Example VI

A fish-spread was prepared from the following ingredients.

| Ingredient wt% | |
|---|---|
| Cod | 25% |
| mackerel | 20% |
| sea-salmon | 25% |
| ice/water | 18% |
| mesomorphic phase | 8.5% |
| salt | 1% |
| spices | 0.4% |
| Na-monoglutamate | 0.1% |
| milk protein | 2% |

The spread was prepared by heating the fish to 70°C while cutting, followed by addition of the dry ingredients, the ice/water mixture and the mesomorphic phase (as in example I). The cutting was continued until a homogeneous spread like product was obtained. The resulting product was of reduced fat-content as compared to standard fish spreads, but has nevertheless a good, juicy taste.

## Claims

1. Meat product containing a mesomorphic phase of edible surfactant.

2. Meat product according to claim 1, comprising bulk regions of said mesomorphic phase of edible surfactant.

3. Meat product according to claim 1 or 2, comprising discrete areas of mesomorphic phase having a particle size between 1 µm and 1,000 µm.

4. Meat product according to claim 2 or 3, wherein at least 5% by volume of the product is in the form of a mesomorphic phase.

5. Meat product according to one or more of the preceding claims comprising a three-dimensional structure of hydrophilic surfactant crystals.

6. Meat product according to one or more of the preceding claims in which the mesomorphic phase is an α-gel.

7. Meat product according to one or more of the preceding claims, comprising pork, beef, poultry, game, fish or mixtures thereof.

8. Meat product according to one or more of the preceding claims, comprising comminuted or ground animal tissue or substitute therefor.

9. Meat product according to one or more of the preceding claims, being selected from the group of pâte, sausages, hamburgers, fish and poultry.

10. Process for the preparation of a meat product, said process comprising the in-situ preparation of a mesomorphic phase of edible surfactant or the addition of a separately prepared mesomorphic phase of edible surfactant.

## Patentansprüche

1. Fleischprodukt, welches eine mesomorphe Phase eines eßbaren Surfactants enthält.

2. Fleischprodukt noch Anspruch 1, welches Massezonen der genannten mesomorphen Phase des eßbaren Surfactants umfaßt.

3. Fleischprodukt nach Anspruch 1 oder 2, welches diskrete Bereiche der mesomorphen Phase mit einer Teilchengröße zwischen 1 µm und 1000 µm umfaßt.

4. Fleischprodukt nach Anspruch 2 oder 3, bei welchem zumindest 5 %, bezogen auf das Volumen des Produkts, in Form einer mesomorphen Phase vorliegen.

5. Fleischprodukt nach einem oder mehreren der vorhergehenden Ansprüche, welches eine dreidimensionale Struktur aus hydrophilen Surfactant-Kristallen umfaßt.

6. Fleischprodukt nach einem oder mehreren der vorhergehenden Ansprüche, bei welchem die mesomorphe Phase ein α-Gel ist.

7. Fleischprodukt nach einem oder mehreren der vorhergehenden Ansprüche, welches Schweinefleisch, Rindfleisch, Geflügel, Wild, Fisch oder Mischungen hievon umfaßt.

8. Fleischprodukt nach einem oder mehreren der vorhergehenden Ansprüche, welches zerkleinertes oder gemahlenes tierisches Gewebe oder Ersatzstoffe hierfür umfaßt.

9. Fleischprodukt nach einem oder mehreren der vorhergehenden Ansprüche, welches aus der Gruppe von Pasteten, Würsten, Hamburgern, Fisch und Geflügel ausgewählt ist.

10. Verfahren zur Herstellung eines Fleischprodukts, welches die in-situ Herstellung einer mesomorphen Phase eines eßbaren Surfactants oder den Zusatz einer getrennt hergestellten mesomorphen Phase eines eßbaren Surfactants umfaßt.

## Revendications

1. Produit carné contenant une phase mésomorphe d'agent tensio-actif comestible.

2. Produit carné selon la revendication 1, comprenant des régions en masse de ladite phase mésomorphe d'agent tensio-actif comestible.

3. Produit carné selon la revendication 1 ou 2, comprenant des zones discrètes de phase mésomorphe ayant une taille particulaire comprise entre 1 µm et 1000 µm.

4. Produit carné selon la revendication 2 ou 3, dans lequel au moins 5% en volume du produit est sous la forme d'une phase mésomorphe.

5. Produit carné selon une ou plusieurs des revendications précédentes, comprenant une structure tridimensionnelle de cristaux d'agent tensio-actif hydrophile.

6. Produit carné selon une ou plusieurs des revendications précédentes, dans lequel la phase mésomorphe est un gel alpha.

7. Produit carné selon une ou plusieurs des revendications précédentes, comprenant du porc, du boeuf, de la volaille, du gibier, du poisson, ou leurs mélanges.

8. Produit carné selon une ou plusieurs des revendications précédentes, comprenant un tissu animal réduit en petites dimensions ou broyé, ou un de ses substituts.

9. Produit carné selon une ou plusieurs des revendications précédentes, choisi dans le groupe constitué par les pâtés, les saucisses, les hamburgers, les poissons et la volaille.

10. Procédé de préparation d'un produit carné, ledit procédé comprenant la préparation in situ d'une phase mésomorphe d'un agent tensio-actif comestible ou l'addition d'une phase mésomorphe séparément préparée d'agent tensio-actif comestible.
